Europäisches Patentamt

European Patent Office

Office européen des brevets

(19)

(11) Numéro de publication: **0 389 568 B1**

(12) **FASCICULE DE BREVET EUROPEEN**

(45) Date de publication de fascicule du brevet: **12.05.93** (51) Int. Cl.⁵: **G01N 25/02**, G01N 27/18

(21) Numéro de dépôt: **89901862.6**

(22) Date de dépôt: **24.01.89**

(86) Numéro de dépôt internationale :
**PCT/FR89/00022**

(87) Numéro de publication internationale :
**WO 89/06794 (27.07.89 89/16)**

(54) **PROCEDE D'ETUDE ET DE CONTROLE DES CHANGEMENTS D'ETAT D'UN MILIEU LIOUIDE OU GELIFIE PAR MESURE DIFFERENTIELLE DES CARACTERISTIOUES THERMIOUES DUDIT MILIEU ET DISPOSITIF POUR LA MISE EN OEUVRE DE CE PROCEDE.**

(30) Priorité: **25.01.88 FR 8800803**

(43) Date de publication de la demande:
**03.10.90 Bulletin 90/40**

(45) Mention de la délivrance du brevet:
**12.05.93 Bulletin 93/19**

(84) Etats contractants désignés:
**AT BE CH DE FR GB IT LI LU NL SE**

(56) Documents cités:
**EP-A- 0 144 443
DE-B- 1 473 303
FR-A- 2 586 297
GB-A- 2 176 011**

**Soviet Inventions Illustrated, semaine E19,
23 Juin 1982, no. F6456 E/19, SO3, & JP-A-
851222 (KIEV POLY) 30 juillet 1981**

(73) Titulaire: **INSTITUT NATIONAL DE LA RE-
CHERCHE AGRONOMIOUE (INRA)
147, Rue de l'Université
F- 75007 Paris Cédex 07(FR)**

(72) Inventeur: **NOEL, Yolande
11, allée de la Fontinette
F- 94370 Sucy-en-Brie(FR)**
Inventeur: **BELLON, Jean-Luc
26, rue Julien-Perrin
F- 92160 Antony(FR)**
Inventeur: **HERRY, Jean-Marie
94, Grande Rue
F- 92290 Arpajon(FR)**
Inventeur: **CERF, Olivier
314, rue Saint-Jacques
F- 75005 Paris(FR)**
Inventeur: **PAIN, Jean-Pierre
36, rue Campion
F- 60880 Le Meux(FR)**

EP 0 389 568 B1

Rank Xerox (UK) Business Services
(3.10/3.6/3.3.1)

**Review of Scientific Instruments, volume 44, no. 6, juin 1973, the American Institute of Physics, D.L. Martin et al.: "Automatic calo−rimetry in the 3−30 K range. The specific heat of copper", pages 675−684**

Inventeur: **ANTONINI, Gérard**
**283, rue de Charenton**
**F− 75012 Paris(FR)**

(74) Mandataire: **Phélip, Bruno et al**
**c/o Cabinet Harlé & Phélip 21, rue de La**
**Rochefoucauld**
**F− 75009 Paris (FR)**

## Description

La présente invention concerne un procédé d'étude et de contrôle des changements d'état d'un milieu liquide ou gélifié, par exemple de la gélification d'un fluide liquide ou la liquéfaction d'un gel, par mesure différentielle des caractéristiques thermiques dudit milieu.

L'invention vise également un dispositif pour la mise en oeuvre de ce procédé. Cette invention s'applique plus particulièrement aux industries alimentaires.

Dans le document EP-A-O144443, a été décrit un procédé d'application du principe de l'anémométrie à fil chaud pour suivre la coagulation du lait. Cette méthode permet de façon plus générale de suivre une transition liquide-gel dans des conditions isothermes. En fait, de l'énergie est apportée au milieu initialement liquide sous forme de chaleur au moyen d'un fil de platine, après quoi on réalise la mesure de la température de ce fil. Dans le milieu liquide, la convection naturelle conduit à un équilibre des transferts thermiques entre le fil et le produit de sorte que la température du fil est constante, légèrement plus élevée que celle du milieu environnant. Si le milieu se coagule ou se gélifie, le changement de structure de ce milieu s'accompagne d'un changement de régime thermique avec passage de la convection naturelle à la conduction. Ceci se traduit par une augmentation de la température du fil de platine, ce qui correspond à une modification du coefficient de transfert de chaleur dans le milieu puisque la conductivité thermique de ce dernier reste constante. Dans le domaine des industries alimentaires, d'une part, la condition d'isothermie n'est jamais parfaitement réalisée et, d'autre part, plusieurs cas de gélification ou de coagulation sont associés à une variation de température, par exemple la gélification de la gélatine, des polysaccharides, et plus généralement la fabrication des sauces et des confitures, de même que la coagulation à chaud d'un lait emprésuré à froid et autres. Dans les cas exposés ci-dessus, les perturbations apportées par la variation de température ne permettent pas au capteur proposé dans le brevet précité de mettre en évidence le phénomène de coagulation.

Un but de la présente invention est de prendre en compte les variations de température du milieu susceptible d'être coagulé ou gélifié pour contrôler et étudier les changements d'état de ce milieu.

Un autre but de la présente invention est d'utiliser ces caractéristiques pour obtenir une information uniquement relative aux phénomènes de coagulation stricto-sensu.

La présente invention a donc pour objet un procédé d'étude et de contrôle des changements d'état d'un milieu liquide ou gélifié, par exemple de la gélification d'un fluide liquide ou la liquéfaction d'un gel, par mesure différentielle des caractéristiques thermiques dudit milieu, caractérisé par les étapes consistant à:

- mesurer la température du milieu au moyen d'une première sonde délivrant un premier signal indicatif de la température de ce milieu,
- apporter de l'énergie sous forme de chaleur au milieu au moyen d'une seconde sonde qui délivre un second signal, indicatif de la température de cette seconde sonde, la seconde sonde étant disposée suffisamment éloignée de la première sonde pour ne pas perturber en température cette dernière,
- après amplification des premier et second signaux précités, combiner de façon analogique ou numérique les signaux dans un étage correcteur qui calcule à partir de la température mesurée par la première sonde un signal de décalage par lequel le second signal est corrigé pour délivrer un signal représentant une information strictement indicative du changement d'état du milieu.

L'invention s'étend également à un dispositif pour la mise en oeuvre de ce procédé, caractérisé en ce qu'il comprend une première sonde pour mesurer la température du milieu et délivrant un signal indicatif de celle-ci, une seconde sonde pour apporter de l'énergie sous forme de chaleur au milieu et délivrant un signal indicatif de sa propre température, des moyens d'amplifications des signaux précités et des moyens de correction qui calculent à partir de la température mesurée par la première sonde un signal de décalage par lequel le second signal est corrigé.

Ce dispositif peut comprendre en outre des moyens d'amplification du signal délivré par lesdits moyens de correction.

Selon la présente invention, on utilise avantageusement des sondes à résistance de platine.

D'autres avantages et caractéristiques de la présente invention apparaîtront à la lecture des formes et exemples de réalisation décrits dans ce qui suit en référence aux dessins annexés dans lesquels:

Fig. 1 est une vue schématique du dispositif capteur selon la présente invention;

Fig. 2 représente les courbes $\theta_1$ (sonde de température) et SGT (1) (sonde de grandeur thermique) illustrant la cinétique de gélification d'une solution de gélatine à 1%;

Fig. 3 représente les courbes $\theta_2$ (sonde de température) et SGT (2) (sonde de grandeur thermique) illustrant la cinétique de gélification d'une solution de gélatine à 5%;

Fig. 4 représente les courbes $\theta_3$) (sonde de température) et SGT (3) (sonde de grandeur thermique) illustrant la cinétique de gélification d'une solution de gélatine à 10%;

Fig. 5 représente les courbes $\theta_4$ (sonde de température) et SGT (4) (sonde de grandeur thermique) illustrant la cinétique de coagulation d'un lait emprésuré à froid;

Fig. 6 représente les courbes H (sonde de type HORI) SGT (5) (sonde de grandeur thermique) et $\theta_5$ (sonde de température) illustrant la cinétique de coagulation d'un autre lait emprésuré à froid.

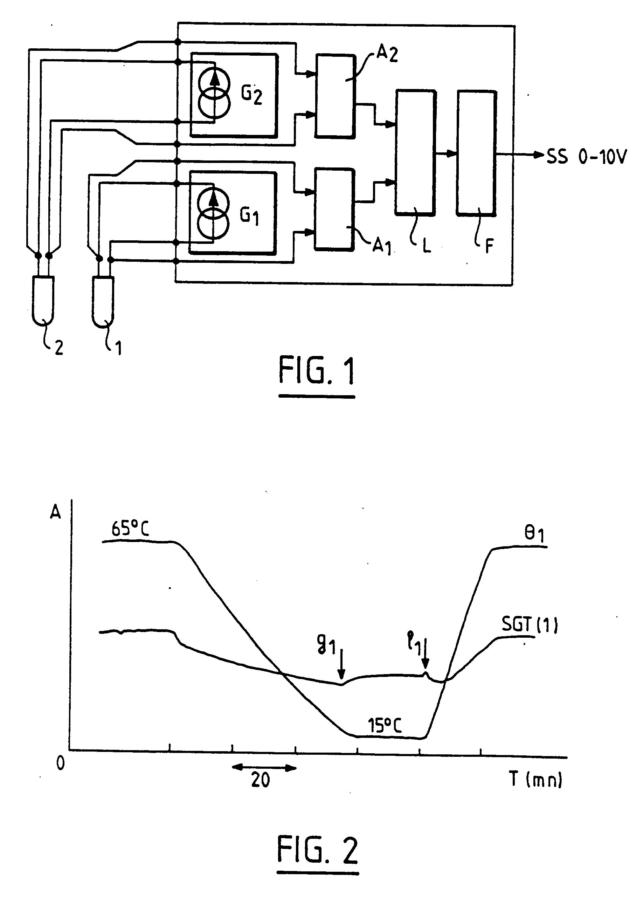

Le dispositif capteur représenté à la Figure 1 comporte deux sondes 1, 2 à résistance de platine de 100 ohms à 0°C conditionnées en ampoule de verre, présentant par exemple un diamètre de 2 mm pour une longueur de 12 mm. La première sonde 1, dite sonde de température, assure la mesure de la température du milieu, tandis que la seconde sonde 2, dite sonde de grandeur thermique, apporte de l'énergie sous forme de chaleur au milieu et délivre un signal qui indique sa propre température. Les dimensions de la sonde de grandeur thermique 2 sont choisies en fonction du produit étudié afin de respecter une quantité de chaleur fournie par unité de surface suffisamment faible pour conférer au capteur une qualité de finesse ou discrétion. On peut se procurer facilement de telles sondes dans le commerce.

Une sonde de platine ainsi conditionnée assure une mobilité et surtout une sensibilité supérieure aux capteurs de température du type thermocouple généralement utilisés. Le compromis entre finesse et sensibilité est réalisé par le conditionnement de la sonde de platine chauffante décrite ci-dessous.

Le chauffage du fil de platine de la sonde de grandeur thermique 2 est assuré par effet Joule à partir d'une source de courant calibré $G_2$ d'intensité constante par exemple de 35 mA, ce qui donne une puissance de 0,2 watt pour une densité de flux égale à 1600 W/m². Ce courant doit être suffisamment stable et de plus indépendant de toute variation de résistance pour permettre la mesure de cette résistance. Ainsi, les sources de courant utilisées $G_1$ et $G_2$ utilisant un amplificateur à grand gain et un transistor FET-MOS à excellent isolement en tension, assurent une stabilité en courant de 0,1 mA pour une variation de 10% de la résistance de charge. Le signal issu de la sonde de grandeur thermique 2 est alors amplifié à l'étage $A_2$ avant d'être combiné, de façon analogique ou numérique, dans un étage correcteur L, avec le signal issu de la sonde de température 1. L'étage correcteur L corrige le signal émis par la sonde 2 en tenant compte du signal émis par la sonde 1 pour délivrer une information strictement indicative du changement d'état du milieu.

La mesure de la température de la sonde de grandeur thermique 2 correspond à la mesure de variation de résistance du fil de platine connue par la variation de la tension aux bornes de ce fil. C'est ainsi que pour une intensité I constante, on a :

$V_2$ (T) = $R_2$ (T) x $I_2$, T étant la température de la sonde 2. Avant tout changement de structure du produit, la sonde de grandeur thermique délivre un signal Vo non nul, qui est fonction de la température $\theta$ du produit. En condition isotherme, $\theta$ étant alors constant, Vo est une constante et seule la différence $V_2$(T) − $V_o$ est significative du changement de structure. $V_o$ est alors considérée comme une tension de décalage que l'on note $V_d$.

Lorsque le changement de structure du produit étudié est corollaire d'une variation de la température la tension de décalage $V_d$ n'est plus constante mais est fonction de la température $\theta$ du produit. La sonde de température 1 qui est alimentée par le générateur $G_1$ avec un courant d'intensité 1 mA, délivre une tension analogique $V_1$ ($\theta$) proportionnelle à la température $\theta$. Après étalonnage approprié, la tension de décalage à déduire du signal fourni par la sonde de grandeur thermique 2 peut être calculée à l'étage L, après amplification en $A_2$ soit par une méthode analogique avec un sommateur électronique, soit par une méthode numérique avec un micro-ordinateur ou analogue. Par exemple avec un étalonnage dans l'eau entre 10 et 80°C, en utilisant une carte de conditionnement du signal doté d'un sommateur électronique, la tension de décalage $V_d$ (T) peut être reliée à $V_1$ ($\theta$) par une équation de type aX+b. Le signal V (T) délivré par la sonde de grandeur thermique 2, diminué de la tension de décalage $V_d$ (T), est alors amplifié à l'étage F.

La sensibilité d'une sonde à résistance de platine est voisine de 0,4 /°C. Avec I ($G_2$) = 35 mA, on obtient une sensibilité de 14 mV/°C. La sensibilité d'un thermocouple est de 40 $\mu$ V/°C.

Ainsi, par rapport au capteur du type thermocouple, le rapport des sensibilités est de 350 en faveur de la sonde à résistance de platine de sorte que le montage avec la sonde à résistance de platine assure, avec un seul étage d'amplification F à gain 100, un signal peu bruité et très sensible. De plus, un seul filtre passe-bas à fréquence de coupure inférieure à 1 Hz suffit.

Les exemples d'application suivants ne sont donnés qu'à titre purement illustratif et ne limitent en aucune façon la portée de la présente invention.

EXEMPLE 1 − Gélification

On travaille sur trois solutions de gélatine.

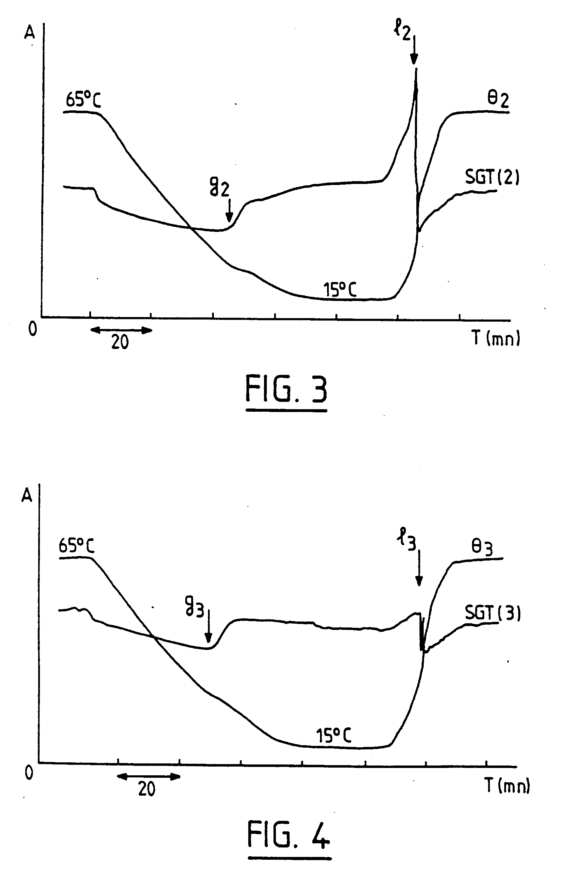

Une quantité déterminée de gélatine en poudre a été mise en solution dans l'eau distillée, puis chauffée dans un four à micro-ondes jusqu'à dissolution complète. La solution obtenue est répartie dans deux béchers de 50 ml chacun. Ces derniers sont placés dans un bain-marie, la sonde de température est plongée dans le premier bécher, la sonde de grandeur thermique dans un second bécher. Ainsi la sonde de grandeur thermique ne perturbe pas la mesure de la température du milieu. Les signaux délivrés par les deux sondes sont enregistrés en continu. Sur les Figures 2, 3 et 4, sont représentés les résultats obtenus avec des solutions de gélatine à trois concentrations différentes 1%, 5% et 10%, respectivement. On soumet ces solutions à une diminution de température de 65°C à 15°C, suivie d'une augmentation de même amplitude.

On observe une légère dérive du signal délivré par la sonde de grandeur thermique pendant la diminution de la température, dérive due à l'utilisation d'une méthode analogique pour le calcul de $V_d$. Il convient de noter que la mise en oeuvre d'une méthode numérique permettrait de supprimer cette dérive. Puis, lorsque la température de gélification est atteinte, respectivement en $g_1$, $g_2$, $g_3$ la pente du signal s'inverse. L'importance de cette pente, ainsi que la température de gélification sont fonction de la concentration en gélatine de la solution. Enfin, lors de la remontée en température, il apparaît une aggravation importante du signal que l'on peut associer au phénomène de liquéfaction du gel, par exemple en $l_1$, $l_2$ et $l_3$, respective-ment sur les Figures 2, 3 et 4, ce phénomène étant l'inverse de la gélification.

EXEMPLE 2 – Coagulation d'un lait emprésuré à froid

On sait que sur un lait emprésuré à froid, l'hydrolyse enzymatique se produit normalement. Par contre, la formation du réseau protéique qui constitue la coagulation proprement dite n'a pas lieu, le lait emprésuré restant ainsi liquide. Il est toutefois possible d'obtenir la formation du réseau protéique en augmentant la température après un certain temps de maintien au froid. Ces phénomènes ont permis la mise au point d'un procédé de technologie fromagère, appelé procédé Stenne-Hutin (1965).

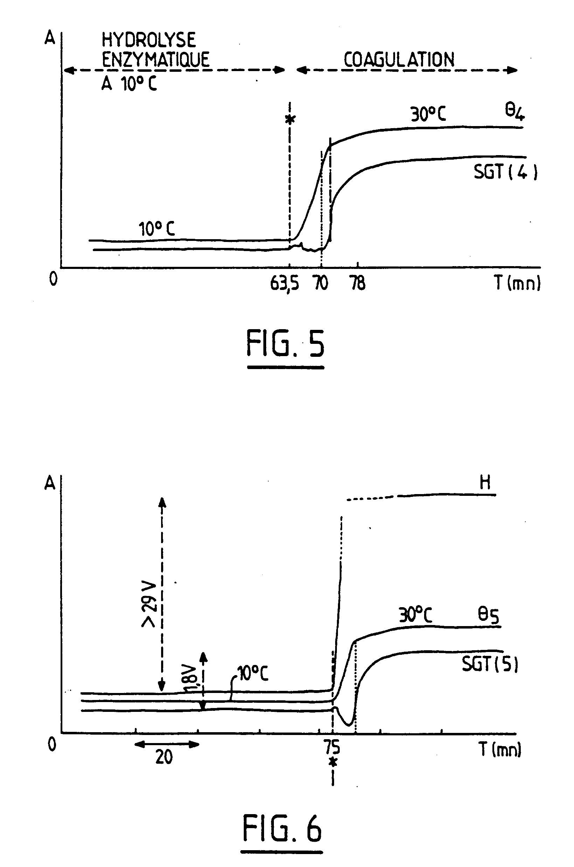

Le dispositif capteur de la présente invention permet de suivre le déroulement des phénomènes. Dans l'exemple illustré à la Figure 5, le lait utilisé est reconstitué à partir d'une poudre de lait écrémé à raison de 100 g/litre, additionné de 1 mmol/kg de $CaCl_2$, le pH d'emprésurage étant de 6,63. On ajoute alors l'agent coagulant sous la forme d'une solution préparée à partir de présure en poudre, à savoir 50 mg/kg de lait, soit 222 $\mu$g/kg de chymo-sine active. On obtient normalement une coagulation de ce lait à 30°C en 15 minutes.

Dans le cas présent le lait emprésuré est maintenu à 10°C environ 1 heure, après quoi on le soumet à une augmentation de température de 10 à 30°C au moyen d'un bain-marie, ce qui nécessite 8 minutes. Pendant tout le temps où le lait emprésuré est maintenu à 10°C, la sonde de grandeur thermique n'indique aucune variation de signal. Lorsque la consigne de température du bain-marie est modifiée, le signal oscille de façon désordonnée autour d'une valeur moyenne proche de la valeur précédente, réflétant ainsi les phénomènes de convection naturelle. Alors que la température approche 30°C, le signal de la sonde de grandeur thermique augmente brusquement avant d'atteindre un plateau. Il est alors possible d'associer le moment du repérage visuel de la formation du réseau, c'est-à-dire le temps de prise des fromagers, sensiblement au moment du point d'inflexion de la courbe.

La Figure 6 présente le même type de cinétique en comparant les résultats obtenus sur les courbes $\theta_5$ et $SGT_5$ avec le dispositif capteur selon l'invention et sur la courbe H obtenue avec une sonde du type décrit par Hori dans le EP-A0144443. Dès le début du changement de consigne de température, on voit sur la courbe H que le signal de la sonde de type Hori augmente brusquement. Il est à noter que cette variation, qui est supérieure au total à 20 volts d'amplitude, ne permet pas de repérer le moment de la coagulation contrairement au signal de la sonde de grandeur thermique incorporée au dispositif capteur de la présente invention.

Ainsi se trouve résolu selon la présente invention le problème du contrôle de la modification et de la coagulation des produits alimentaires, grâce à l'association des deux sondes incorporées au dispositif capteur qui permet en particulier de fournir un signal de sortie indiquant toute évolution d'un milieu se traduisant par une variation du coefficient de transfert de chaleur et par suite de la convection au sein de ce milieu.

Il est clair que la présente invention n'est nullement limitée aux formes et modes de réalisation décrits ci-dessus, Les références des dessins ne sont données qu'à titre purement explicatif et nullement limitatif de la présente invention. En outre, il convient de préciser que les signes de référence insérés après les caractéristiques techniques mentionnées dans les revendications, ont pour seul but de faciliter la compréhension de ces dernières, et n'en limitent aucunement la portée.

**Revendications**

1. Procédé d'étude et de contrôle des changements d'état d'un milieu liquide ou gélifié, par exemple de la gélification d'un fluide liquide ou la liquéfaction d'un gel, par mesure différen‑ tielle des caractéristiques thermiques dudit milieu, caractérisé par les étapes consistant à:
- mesurer la température θ du milieu au moyen d'une première sonde (1) déli‑ vrant un premier signal indicatif de la température de ce milieu,
- apporter de l'énergie sous forme de chaleur au milieu au moyen d'une se‑ conde sonde (2) qui délivre un second signal, indicatif de la température de cette seconde sonde (2), la seconde sonde (2) étant disposée suffisamment éloignée de la première sonde (1) pour ne pas perturber en température cette dernière,
- après amplification des premier et se‑ cond signaux précités, combiner de fa‑ çon analogique ou numérique les si‑ gnaux dans un étage correcteur (L) qui calcule à partir de la température θ me‑ surée par la première sonde un signal de décalage par lequel le second signal est corrigé pour délivrer un signal repré‑ sentant une information strictement in‑ dicative du changement d'état du milieu.

2. Procédé selon la revendication 1, caractérisé en ce qu'on amplifie le signal délivré par l'étage correcteur (L).

3. Procédé selon l'une des revendications 1 ou 2, caractérisé en ce que la correction de l'étape (L) est réalisée de manière analogique en uti‑ lisant un sommateur électronique.

4. Procédé selon l'une des revendications 1 ou 2, caractérisé en ce que la correction à l'étape (L) est réalisée de manière numérique à l'aide d'un microordinateur.

5. Procédé selon l'une des revendications 1 à 4, caractérisé en ce que les sondes précitées (1, 2) sont des sondes à résistance de platine de 100 ohms.

6. Procédé selon l'une des revendications pré‑ cédentes, caractérisé en ce que les sondes précitées (1, 2) sont alimentées en courant de l'ordre de plusieurs dizaines de mA.

7. Dispositif pour la mise en oeuvre du procédé selon l'une des revendications précédentes, caractérisé en ce qu'il comprend une première sonde (1) pour mesurer la température θ du milieu et délivrant un signal indicatif de celle‑ ci, une seconde sonde (2) pour apporter de l'énergie sous forme de chaleur au milieu et délivrant un signal indicatif de sa propre tem‑ pérature, des moyens d'amplifications ($A_1$, $A_2$) des signaux précités et des moyens de cor‑ rection (L) qui calculent à partir de la tempé‑ rature θ mesurée par la première sonde un signal de décalage par lequel le second signal est corrigé.

8. Dispositif selon la revendication 7, caractérisé en ce qu'il comprend en outre des moyens d'amplification (F) du signal délivré par lesdits moyens de correction (L).

9. Dispositif selon l'une des revendications 7 ou 8, caractérisé en ce que les sondes précitées (1, 2) sont des sondes à résistance de platine.

**Claims**

1. Process for investigating and controlling changes of state of a liquid or gelled medium, for example of the gelling of a liquid fluid or the liquefaction of a gel, by differential mea‑ surement of the thermal characteristics of the said medium, characterized by the steps con‑ sisting in:
- measuring the temperature θ of the me‑ dium by means of a first probe (1) de‑ livering a first signal indicating the tem‑ perature of this medium,
- contributing energy to the medium in the form of heat by means of a second probe (2) which delivers a second signal indicating the temperature of this second probe (2), the second probe (2) being arranged sufficiently far away from the first probe (2) not to perturb the latter in respect of temperature,
- after amplification, of the above men‑ tioned first and second signals combin‑ ing in an analogue or digital fashion the signals in a correcting stage (L) which calculates from the temperature θ mea‑ sured by the first probe an offset signal by which the second signal is corrected so as to deliver a signal representing an information indicating strictly the change of state of the medium.

2. Process according to claim 1, characterized in that the signal delivered by the corrector stage (L) is amplified.

3. Process according to either of claims 1 and 2, characterized in that the correction in the stage (L) is carried out according to an analogue fashion by using an electronic adder.

4. Process according to either of claims 1 and 2, characterized in that the correction in the stage (L) is carried out digitally with the aid of a microcomputer.

5. Process according to any one of claims 1 to 4, characterized in that the above‑mentioned probes (1, 2) are 100‑Ohm platinum resis‑tance probes.

6. Process according to any one of the preceding claims, characterized in that the above‑men‑tioned probes (1, 2) are fed with current in the order of several tens of milliamperes.

7. Device for carrying out the process according to any one of the preceding claims, char‑acterized in that it comprises a first probe (1) for measuring the temperature $\theta$ of the me‑dium and delivering a signal indicating the latter, a second probe (2) for contributing en‑ergy to the medium in the form of heat and delivering a signal indicating its own tempera‑ture, means for amplifying (A1, A2) the above‑mentioned signals and means for correcting (L) which calculate from the tem‑perature $\theta$ measured by the first probe an offset signal by which the second signal is corrected.

8. Device according to claim 7, characterized in that it additionally comprises means for am‑plifying (F) the signal delivered by the said correcting means (L).

9. Device according to either of claims 7 and 8, characterized in that the above‑mentioned probes (1, 2) are platinum resistance probes.

**Patentansprüche**

1. Verfahren zum Studieren und Kontrollieren der Zustandsänderungen einer Flüssigkeit oder eines Gels, beispielsweise der Gelierung einer Flüssigkeit oder der Verflüssigung eines Gels, durch differentiales Messen der thermischen Eigenschaften dieses Stoffes, gekennzeichnet durch die folgenden Verfahrensschritte:
  - Messen der Temperatur $\theta$ der Flüssigkeit oder des Gels mit Hilfe einer ersten Sonde (1), die ein erstes Temperatursi‑gnal für die Flüssigkeit oder das Gel liefert,
  - Zuführen von Energie in Form von Wär‑me zur Flüssigkeit oder dem Gel mit Hilfe einer zweiten Sonde (2), die ein zweites Signal liefert, welches die Tem‑peratur dieser zweiten Sonde (2) wiedergibt, wobei diese zweite Sonde (2) genügend weit von der ersten Sonde (1) entfernt ist, so daß sie die Temperatur der letzteren nicht stören kann,
  - nach Verstärkung der vorerwähnten er‑sten und zweiten Signale analoge oder numerische Kombination der Signale in einer Korrekturstufe (L), die ausgehend von der Temperatur $\theta$, die von der ersten Sonde gemessen wurde, ein Verschie‑bungssignal errechnet, um welches das zweite Signal korrigiert wird, um ein Si‑gnal zu liefern, welches eine Information wiedergibt, die exakt die Zustandsände‑rung der Flüssigkeit oder des Gels an‑zeigt.

2. Verfahren nach Anspruch 1, dadurch gekenn‑zeichnet, daß man das von der Korrekturstufe (L) erhaltene Signal verstärkt.

3. Verfahren nach Anspruch 1 oder 2, dadurch gekennzeichnet, daß die Korrektur der Stufe (L) auf analoge Weise unter Benutzung eines elektronischen Summiergliedes erfolgt.

4. Verfahren nach Anspruch 1 oder 2, dadurch gekennzeichnet, daß die Korrektur der Stufe (L) auf numerische Weise mit Hilfe einer Mi‑kroordinators erfolgt.

5. Verfahren nach einem der Ansprüche 1 bis 4, dadurch gekennzeichnet, daß die vorerwähnten Sonden (1, 2) Widerstandssonden aus Platin mit 100 Ohm sind.

6. Verfahren nach einem der vorhergehenden Ansprüche, dadurch gekennzeichnet, daß die vorerwähnten Sonden (1, 2) mit Strömen in der Größenordnung von mehreren zehn mA ver‑sorgt werden.

7. Vorrichtung zur Durchführung des Verfahrens nach einem der vorhergehenden Ansprüche, dadurch gekennzeichnet, daß sie eine erste Sonde (1) zur Messung der Temperatur $\theta$ der Flüssigkeit oder des Gels enthält, die ein Temperaturanzeigesignal liefert, eine zweite Sonde (2), um Energie in Form von Wärme der Flüssigkeit oder Sonde zuzuführen, die ein seiner Temperatur entsprechendes Signal lie‑fert, Verstärkereinrichtungen ($A_1$, $A_2$) für die vorerwähnten Signale und Korrektureinrich‑tungen (L), die ausgehend von der von der ersten Sonde gemessenen Temperatur $\theta$ ein Verschiebungssignal errechnen, durch welches das zweite Signal korrigiert wird.

8. Vorrichtung nach Anspruch 7, dadurch gekennzeichnet, daß sie darüber hinaus eine Verstärkereinrichtung (F) für das von den Korrektureinrichtungen (L) gelieferte Signal enthält.

9. Vorrichtung nach Anspruch 7 oder 8, dadurch gekennzeichnet, daß die Sonden (1, 2) Widerstandssonden aus Platin sind.

FIG. 1

FIG. 2

FIG. 3

FIG. 4

FIG. 5

FIG. 6